# EUROPEAN PATENT APPLICATION

(11) **EP 3 888 610 A1**
(43) Date of publication of application: **06.10.2021**
(21) Application number: 20167457.9
(22) Date of filing: 01.04.2020
(51) Int. Cl.: A61G 7/10, A61B 6/04, G09B 23/28

(54) **PATIENT TRANSFER TRAINING SYSTEM**

(71) Applicant: Koninklijke Philips N.V., 5656 AG Eindhoven (NL)
(72) Inventor: VOGTMEIER, Gereon, 5656 AE Eindhoven (NL); JOHNSON, Mark, 5656 AE Eindhoven (NL); LEUSSLER, Christoph, 5656 AE Eindhoven (NL); SISODIA, Rajendra Singh, 5656 AE Eindhoven (NL)
(74) Representative: Philips Intellectual Property & Standards

(57) **Abstract**

The present invention relates to a patient transfer training system (200), comprising: a sheet (210); a processing unit (220); and a plurality of indicator devices (230). The sheet is configured to be carried by at least one person during transfer of a simulated patient from one area to another area of a medical establishment. The system is configured to generate information relating to support and position of the simulated patient during the transfer. The processing unit is configured to determine a required change in support and/or a required change in position of the simulated patient during the transfer. The determination comprises utilization of the information relating to support and position of the simulated patient during the transfer. The processing unit is configured to control one or more of the plurality of indicator devices to provide instructional information to one or more of the at least one person comprising utilization of the information relating to the required change in support and/or the required change in position of the simulated patient during the transfer.

## Description

### FIELD OF THE INVENTION

The present invention relates to patient transfer training system and to a patient transfer training method.

### BACKGROUND OF THE INVENTION

The workflow for diagnostic imaging exams with CT, MR, PET and hybrid systems includes the transfer of patients, who may be unable to communicate effectively, from the hospital bed to the scan bed before the exam and back after the exam. In current standard clinical practice, several staff members lift and pull the patient manually from the patient's bed to the scan bed with the help of a bed sheet. The identification of pain areas of the patient is important during this transfer, and helps minimize movement of the patient during the scan. Thus, both the pain areas and position are important to be ready for the scan. However, this identification can be difficult with patients who cannot express their pain areas verbally. Furthermore, staff members, who can be inexperienced, are frequently faced with new situations in terms patients with specific pain conditions or impairments and with different transfer scenarios, such as transferring patients from an ambulance, down stairs, upstairs, and into different scanner systems. It is difficult for these staff members optimally to transfer the patient.

There is a need to address these issues.

### SUMMARY OF THE INVENTION

It would be advantageous to have means to improve how a patient is transferred or moved from one place to another place on a bed sheet or sheet within a medical establishment, for example when transferring them to a scanner system.

The object of the present invention is solved with the subject matter of the independent claims, wherein further embodiments are incorporated in the dependent claims. It should be noted that the following described aspects and examples of the invention apply also to the patient transfer training system and to the patient transfer training method.

According to a first aspect, there is provided a patient transfer training system, comprising:
- a sheet;
- a processing unit; and
- a plurality of indicator devices;

The sheet is configured to be carried by at least one person during transfer of a simulated patient from one area to another area of a medical establishment. The system is configured to generate information relating to support and position of the simulated patient during the transfer. The processing unit is configured to determine a required change in support and/or a required change in position of the simulated patient during the transfer. The determination comprises utilization of the information relating to support and position of the simulated patient during the transfer. The processing unit is configured to control one or more of the plurality of indicator devices to provide instructional information to one or more of the at least one person comprising utilization of the information relating to the required change in support and/or the required change in position of the simulated patient during the transfer.

Thus, a medical staff can be trained on how to transport patients from for example a bed to a medical imaging scanner such as an MRI or a CT X-ray scanner in a manner that minimises pain experienced by the patient, providing comfort to the patient and at the same time fulfilling transfer functionality and correct positioning of the patient for imaging.

In an example, the system comprises an input unit. The input unit is configured to receive information relating to a patient. The generation of the information relating to support and position of the simulated patient during the transfer can comprise utilization by the processing unit of the information relating to the patient.

In this way, medical staff can be trained in how to transport patients on a sheet that takes into account information relating to patients, held for example in a database. Thus, medical staff can be trained to transport multiple different patients, of different age, weight, physical and mental disabilities or impairments, where instruction information is provided to the medical staff relating to how better to transport the patients during the transfer process itself that takes into account these patient features.

In an example, the information relating to the patient comprises one or more of: information relating to at least one pain area of at least one part of the body, age, weight, body mass index, physical condition, psychological condition.

In an example, the input unit is configured to receive information relating to a transfer scenario between the two areas of the medical establishment. The determination of the required change in support and/or the required change in position of the simulated patient during the transfer can comprise utilization of the information relating to the transfer scenario.

Thus, the feedback provided to the people being trained in transferring patients can take into account multiple scenarios, such as transferring a patient from a bed to a medical scanner, transferring a patient from an ambulance to a bed, transferring a patient up and down stairs, or other numerous different transfer scenarios.

In an example, the processing unit is configured to control one or more of the indicator devices to provide instructional information to one or more of the at least one person comprising generation of at least one image of at least a part of the simulated patient on the sheet. The generation of at least one image of at least a part of the simulated patient on the sheet can comprise utilization of the information relating to the patient.

Thus for example, an image can be presented to the people being trained of a person on the sheet, which could be actually projected onto the sheet or generated within the sheet or presented on a VDU or head-up display is appropriate. Then, this can take into account the size of the person, and pain the person could be feeling in one or more areas such as in an arm and also in a leg. The projected image could then be moved to simulate the patient feeling pain and moving this limb, and the system at the same time would provide feedback as to a change in support and/or position of the simulated patient, which could be for example through a second generated image indicating where the patient should be positioned and supported. This enables adjustment of the sheet to be made to bring the patient into the correct position and/or support configuration.

Also, it may not be necessary to provide imagery of the whole patient, but just the upper torso and arms and head, because this part of the patient is the part where the patient is injured and/or could experience pain during movement.

In an example, the generation of the at least one image of the at least part of the simulated patient on the sheet comprises utilization of the information relating to the transfer scenario.

Thus, the training can take into account different training scenarios, where the people being trained may only be in a flat open space, but the training scenario could be going up and down stairs. Then, not only could the image on the sheet be moved to take into account for example going downstairs and the person's weight moving towards one end of the sheet, and at the same time information is provided back to the people being trained as to the required change in support and/or position of the simulated patient, for example by projecting a second image as to where ideally the patient should be positioned enabling the person or persons holding the sheet to make adjustments as required to bring the patient to the correct position and support configuration.

In an example, the generation of the at least one image of the at least one part of the simulated patient on the sheet comprises utilization of the required change in support and/or a required change in position of the simulated patient during the transfer.

In this manner, an image of the simulated patient can be provided to the people being trained relating to the current position and level of support of the simulated patient on the sheet, which may not be the optimised position or level of support. At the same time, another image can be provided relating to the optimised position and/or support of the patient, enabling the people being trained to make appropriate adjustments to how they are carrying the sheet.

In an example, the one or more indicator devices comprises at least one light source integrated into the sheet, a visual display unit, a virtual reality head-up display worn by one or more of the at least one person.

In an example, the system comprises a dummy patient. The sheet is configured to carry the dummy patient during the transfer. The information relating to support and position of the simulated patient during the transfer can comprise information derived from the dummy patient lying on the sheet during the transfer.

In this manner, the people being trained are carrying a sheet with an actual dummy being carried upon the sheet and transferred from one area to another, where for example multiple different dummies can be used to account for different patients. Alternatively, the dummy can be a programmable dummy which can be dynamically configured to generate different patients/conditions.

In an example, the determination of the required change in support and/or the required change in position of the simulated patient during the transfer comprises utilization of the information derived from the dummy patient lying on the sheet during the transfer.

Thus, feedback provided to the people being trained in transferring a simulated patient is provided from the dummy being carried on the sheet, in that feedback relating to a change in support and/or change in position required is derived from how the dummy is actually being carried at that time.

In an example, the sheet and/or dummy patient comprises at least one pressure sensor and/or at least one force sensor. The at least one pressure sensor and/or at least one force sensor is configured to provide the processing unit with pressure and/or force related information resulting from the dummy patient lying on the sheet. The information derived from the dummy patient lying on the sheet during the transfer can comprise the pressure and/or force related information.

In an example, the dummy patient has at least one movable joint linking two parts of the dummy patient comprising one or more of: a movable and controllable left leg knee joint, a movable and controllable right leg knee joint, a movable and controllable left leg hip joint, a movable and controllable right leg hip joint, a movable and controllable left leg ankle joint, a movable and controllable right leg ankle joint, a movable and controllable left arm elbow joint, a movable and controllable right arm elbow joint, a movable and controllable left arm wrist joint, a movable and controllable right arm wrist joint, a movable and controllable left arm shoulder joint, a movable and controllable right arm shoulder joint, a movable and controllable neck joint linked to a head. The processing unit is configured to control movement of the at least one movable joint such that the two parts linked by the joint move relative to each other.

In an example, control of the movement of the at least one joint comprises utilization of the information relating to the patient.

In this manner, a semi-real situation can be generated, where for example training of a patient with a painful leg and painful arm, for example due to broken limbs can be simulated, and where one or more of these limbs is moving can be simulated. On the basis of that movement the people being trained are provided with information relating to how the patient should be supported and/or positioned during the transfer.

In an example, the control of the movement of the at least one joint comprises utilization of the information relating to the transfer scenario.

In an example, the plurality of indicator devices comprises a plurality of haptic actuators integrated into at least one edge and/or central region of the sheet. The control of the one or more of the plurality of indicator devices to provide information relating to the required change in support and/or the required change in position of the simulated patient during the transfer can comprise control of one or more of the haptic actuators.

In an example, the determination of the required change in support and/or the required change in position of the simulated patient during the transfer comprises a comparison between a current support and/or position of the simulated patient with an ideal support and/or position of the simulated patient.

In a second aspect, there is provided a patient transfer training method, comprising:
a) carrying a sheet by at least one person during transfer of a simulated patient from one area to another area of a medical establishment;
b) generating information relating to support and position of the simulated patient during the transfer;
c) determining by a processing unit a required change in support and/or a required change in position of the simulated patient during the transfer, wherein the determining comprises utilizing the information relating to support and position of the simulated patient during the transfer; and
d) controlling one or more of a plurality of indicator devices to provide instructional information to one or more of the at least one person comprising utilizing the information relating to the required change in support and/or the required change in position of the simulated patient during the transfer.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic set up of an example of an apparatus for displaying patient information;
Fig. 2 shows a method for displaying patient information;
Fig. 3 shows a schematic illustration of an exemplar bed sheet forming part of the apparatus of Fig. 1;
Fig. 4 shows a schematic set up of an example of a patient transfer training system;
Fig. 5 shows a patient transfer training method;
Fig. 6 shows a schematic set up of an example of a patient transfer training system with a dummy patient with sensors and user interaction devices;
Fig. 7 shows a schematic illustration of an exemplar bed sheet forming part of a specific example of a patient transfer training system and method; and
Fig. 8 shows a detailed workflow relating to utilization of an exemplar patient transfer training system.

### DETAILED DESCRIPTION OF EMBODIMENTS

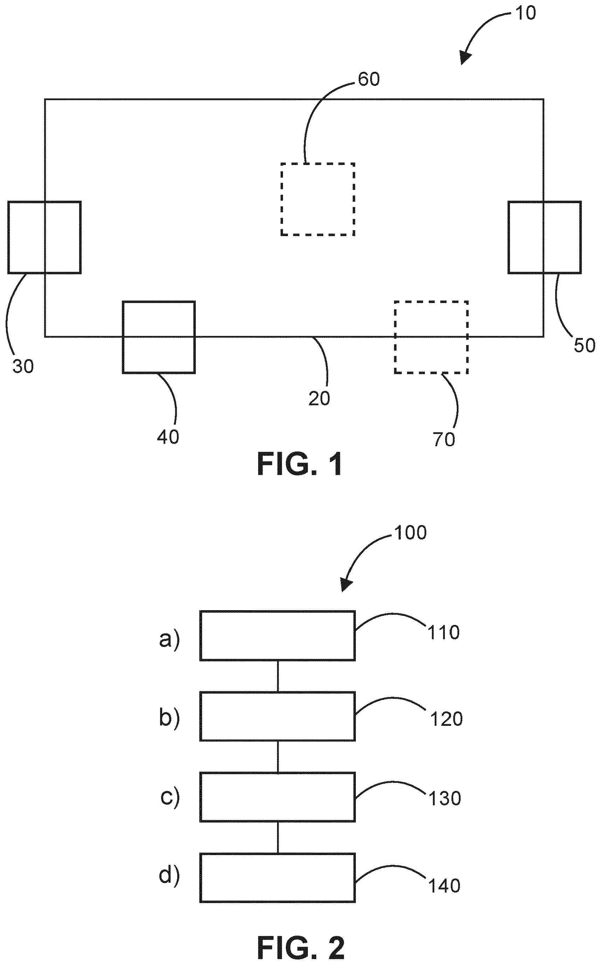

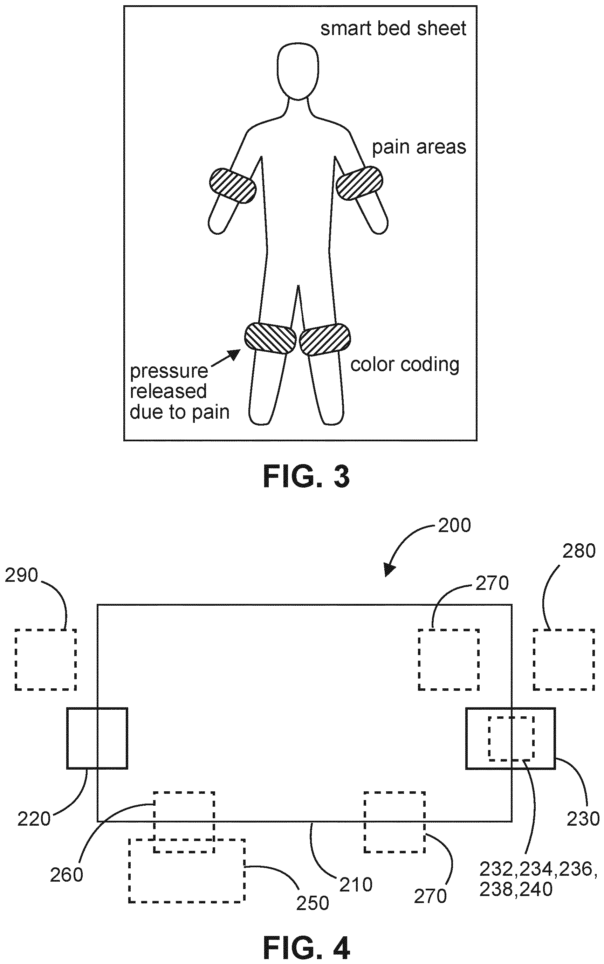

In the following detailed description a patient transfer training system 200 and method 300 are described where reference is made to Figs. 4-8. In that system and method a bed sheet or sheet 210 is utilized during training. A specific example of a bed sheet 210 is described with respect to Figs. 1-3, where the sheet is referred to as sheet 20 that forms part of an apparatus 10 for displaying patient pain information. Thus, the sheet 20 described with respect to Figs. 1-3 can be utilized in a training mode configuration as a specific example of the sheet 210 of the patient transfer training system 200 and method 300.

Furthermore, the apparatus 10 described with respect to Figs. 1-3 provides a means to identify pain areas of a patient when transferring them on a bed sheet, for example from a bed to a scanner. This information can then be collected for numerous different patients in different transfer scenarios, and be used as a database of reference material during the training described with respect to Figs. 4-8. Thus, this database of information can be utilized to help inform how a simulated patient should be supported and/or positioned during transfer within a training session, enabling the staff members to become proficient in transferring different patients in different situations.

Fig. 1 shows an example of an apparatus 10 for displaying patient pain information, where essential features are shown in bold lines and optional features are shown in hashed lines. The apparatus 10 comprises a sheet 20, an input unit 30, a processing unit 40, and at least one light source 50. The sheet is configured to support a patient during transfer from a bed of the patient to a bed of a diagnostic imaging system. The input unit is configured to receive information relating to at least one known pain area of at least one part of the patient's body. The input unit is configured also to provide the processing unit with the information relating to the at least one known pain area of at least one part of the patient's body. The processing unit is configured to control the at least one of the at least one light source to provide light illumination to at least one first position of the sheet. Control of the at least one of the at least one light source comprises utilization of the information relating to the at least one known pain area of at least one part of the patient's body.

In this manner, patients can be moved and examined with diagnostic imaging systems, where those patients may not be able to express if they are in pain, but medical staff are clearly provided with information as to where the patient has pain. Furthermore, a staff member may know about where a particular patient is feeling pain, but they may not be with that patient when they are being moved and/or examined elsewhere. However, information from this informed staff member can be used to provide appropriate illumination of the sheet on which the patient is lying in order that they are than duly informed. Thus, the apparatus has particular utility to those patients who may be handicapped in a manner that makes it difficult for them to express their pain to other quickly and clearly, or for children etc.

In an example, the at least one light source is at least one LED, that can operate at different colours.

In an example, at least a part of the sheet can comprise a photonic textile sheet. In an example, the sheet can be a photonic textile sheet.

In an example, the information received by the input unit was input by a user.

In an example, the information received by the input unit was provided by a machine - for example the output from an electronic health record, or the output of an AI decision support algorithm (e.g. CDS tool).

According to an example, the at least one light source is integrated into the sheet.

According to an example, the apparatus comprises at least one pressure sensor 60 integrated into the sheet. The at least one pressure sensor is configured to provide the processing unit with pressure related information resulting from the patient's body lying on the sheet.

According to an example, the processing unit is configured to utilize the pressure related information to control the at least one of the at least one light source to provide light illumination at the at least one first position of the sheet.

In this manner, it is known what parts of the patient have pain and pressure sensors can be used to locate the patient on the sheet, and then the sheet can be illuminated by integrated light sources in the sheet at the correct positons of the patient.

According to an example, the processing unit is configured to utilize the pressure related information to control one or more of the at least one light source to provide light illumination at at least one second position of the sheet.

According to an example, the processing unit is configured to process the pressure related information to determine a change in pressure at a location of the sheet associated with a part of the patient's body when lying on the sheet. The processing unit is configured to control the one or more of the at least one light source to provide light illumination at the location of the sheet where there was a pressure change.

In other words, if the patient for example releases a part of their body from the sheet, a change in pressure is detected and the sheet at that location can be appropriately illuminated in order that medical staff can be made aware and take remedial action.

In an example, the at least one first position comprises the at least one second positon. In other words, it is a known area of pain that would appear to be particularly painful for the patient.

In an example, the at least one second position is not comprised within the at least one first position. In other words, the patient would appear to be feeling pain at a part of the body that it was not known to be painful for the body. Thus, a new painful area for the patient can be detected and easily and effectively communicated to medical staff, who can then act as required.

In an example, the processing unit is configured to process the pressure related information to determine a change in pressure from one location to a second location of the sheet associated with a part of the patient's body when lying on the sheet; and wherein the processing unit is configured to control the one or more of the at least one light source to provide light illumination at the second location relative to the first position of the sheet.

In other words, when a patient shifts the location on the sheet from a position relative to another position, the pain information presented to medical practitioners also correspondingly changes, through the processing unit changing the light source at the relative locations. The relative location be again being derived from the change in the pressure.

According to an example, the processing unit is configured to control the at least one of the at least one light source to provide light at the at least one first position in a first colour and to control the one or more of the at least one light source to provide light at the at least one second position in a second colour.

According to an example, all of the input unit, the processing unit and the at least one light source are separate from the sheet.

In this way, a Magnetic Resonance compatible smart sheet is provided as part of the apparatus.

In an example, the light is projected onto the sheet.

In an example, the light is brought into the sheet through a series of optical fibers from a central lighting unit (which can be at a distance from the sheet - e.g. outside the MRI). The fibers are then distributed across the sheet and terminate (and out-couple the light) at grid points in e.g. a square grid. In an example, there are more fibers close to the centre of the sheet. In this way there is higher spatial resolution where the patient will mostly lie.

According to an example, the apparatus comprises at least one pain sensing device 70. The at least one pain sensing device is configured to provide the processing unit with information relating to the patient. The processing unit is configured to control the at least one light source on the basis of the pain information.

According to an example, the at least one pain sensing device comprises a galvanic skin conductance sensor. The information relating to the patient can then comprise a skin conductance of the patient.

In this manner, for an episode of acute pain about 1 second after this commences there is a large increase in the patient's skin conductance. The processing unit can then for example set all the at least one light source to illuminate the entire sheet to inform medical staff that immediate attention is required.

According to an example, the galvanic skin conductance sensor is at least partially integrated into the sheet.

According to an example, the at least one pain sensing device comprises a camera configured to acquire imagery to the patient. The information relating to the patient can then comprise imagery of the face of the patient and/or of the body of the patient.

In this manner, if a facial expression of the patient and/or cramping or spasm is detected, the processing unit can then for example set all the at least one light source to illuminate the entire sheet to inform medical staff that immediate attention is required.

According to an example, the at least one pain sensing device comprises a microphone. The information relating to the patient can then comprise one or more sounds associated with the patient.

In this manner, if the processing unit determines that the patient has cried out or otherwise expressed that they are in pain verbally, the processing unit can then for example set all the at least one light source to illuminate the entire sheet to inform medical staff that immediate attention is required.

According to an example, the microphone is integrated into the sheet.

Fig. 2 shows a method 100 for displaying patient pain information in its basic steps. The method 100 comprises:
- in a using step 110, also referred to as step a), using an input unit to input information relating to at least one known pain area of at least one part of a patient's body; in a providing step 120, also referred to as step b), providing a processing unit with the information relating to the at least one known pain area of at least one part of the patient's body;
- in a laying step 130, also referred to as step c), laying a patient on a sheet, wherein the sheet is configured to support a patient during transfer from a bed of the patient to a bed of a diagnostic imaging system;
- in a controlling step 140, also referred to as step d), controlling by the processing unit at least one of at least one light source to provide light illumination at at least one first position of the sheet, wherein control of the at least one of the at last one light source comprises utilization of the information relating to the at least one known pain area of at least one part of the patient's body.

In an example, the at least one light source is integrated into the sheet.

In an example, at least one pressure sensor is integrated into the sheet, and wherein the method comprises providing the processing unit with pressure related information resulting from the patient's body lying on the sheet.

In an example, the method comprises the processing unit utilizing the pressure related information to control the at least one of the at least one light source to provide light illumination at the at least one first position of the sheet.

In an example, the method comprises the processing unit utilizing the pressure related information to control one or more of the at least one light source to provide light illumination at at least one second position of the sheet.

In an example, the method comprises the processing unit processing the pressure related information to determine a change in pressure at a location of the sheet associated with a part of the patient's body when lying on the sheet, The method then comprises the processing unit controlling the one or more of the at least one light source to provide light illumination at the location of the sheet where there was a pressure change.

In an example, the method comprises the processing unit controlling the at least one of the at least light source to provide light at the at least one first position in a first colour and controlling the one or more of the at least one light source to provide light at the at least one second position in a second colour.

In an example, all of the input unit, the processing unit and the at least one light source are separate from the sheet.

In an example, the method comprises the processing unit controlling the at least one light source on the basis of the pain information provided from at least one pain sensing device.

In an example, the at least one pain sensing device comprises a galvanic skin conductance sensor, and wherein the information relating to the patient can comprise a skin conductance of the patient.

In an example, the galvanic skin conductance sensor is at least partially integrated into the sheet.

In an example, the at least one pain sensing device comprises a camera configured to acquire imagery to the patient. The information relating to the patient can comprise imagery of the face of the patient and/or of the body of the patient.

In an example, the at least one pain sensing device comprises microphone. The information relating to the patient can comprise one or more sounds associated with the patient.

In an example, the microphone is integrated into the sheet.

The apparatus and method for displaying patient information are now described in more detail with reference to Fig. 3.

As described above, the normal method of moving a patient from their bed to a scanner such as CT, MR, or PET involves moving the patient while on a bed sheet, with several staff members required to be present and to work together to transfer the patient. This transfer may be painful or at least uncomfortable for the patient. Some patients, for example those handicapped in particular ways or children or through some other reason can find it difficult to communicate that they are in pain, and where they are feeling. Also, staff members who know about where the patient is feeling pain may not accompany the patient during the transfer of the patient to a scanner. The apparatus and method for displaying pain information of a patient, as described above with respect to Figs. 1-2, and now described with reference to Fig. 3 addresses these issues, representing the pain areas for the patient autonomously even if they cannot express where they are feeling pain verbally.

This apparatus and method for displaying patient information reduces the movement of the patient during the scan due to external pain. This is visually indicated with the smart bed sheet with colour coding. Reference here to a "sheet" means any thin flexible object, comprising any of material, plastic, rubber, glass fiber, metal (wire or sheet) etc, that is suitable for transferring a patient.

In summary a smart bed sheet is used, which can be helpful to transfer patient to the scan bed and retain the pain information of the patient autonomously. This involves identifying the pain areas for the patient and transferring this pain information to the bed sheet.

Thus, in a particular embodiment the following applies: Pre program the pain areas in the bed sheet based on the prior information collected from the patient;

Pressure sensitive fabrics are used to emphasize the live pain areas of the patient. A pillow/cushion can then be used to release the pressure for corrective action;

By combining above information, the pain areas can be shown in different colour patches based on the intensity with LEDs embedded in the cloth of bed sheet. This avoids motion of the patient during the scan, the patient can be placed in the correct posture for the scan by taking corrective action for the pain areas;

Use flexible cloth to change the color or pattern.

Fig. 3 shows a detailed example of one embodiment of the apparatus. A smart bed sheet with embedded LEDs. Existing pain information for the patient is transferred to the smart bed sheet to display the pain areas. This helps the staff to recognize the pain areas of the patient easily with colour coding during the transfer from patient bed to the scanner bed. The information of the pain areas may be gathered by manual input of the patient or the hospital staff via a dedicated user interface that can transfer the information to the bed sheet. The user interface can be displayed on a tablet, notebook or any other computer and may present a whole-body picture or at least parts of the body which can be selected as pain areas. In addition, the intensity of the pain can be indicated, e.g. by a scale from 1 to 10. As alluded to above, and as described in more detail below, the sheet alone or as part of the apparatus in specific embodiments can be used in a simulation mode to aid training of the transfer of patients from one part of a medical establishment to another, used with or without a dummy patient, in addition to displaying pain information for a patient being transferred.

In addition to having LEDs embedded in the smart sheet, there are pressure sensors embedded in the smart sheet. If the patient wishes to express his pain areas, he may release the part of the body so that pressure sensors embedded in the smart bed sheet identifies the pain areas by changing the colour. To reduce the false positives, the initial position of the patient on the bed sheet is acquired along with the information relating to existing pain areas, and the present change of colour can be compared against that reference. The staff can take corrective action with pillows/cushions to release the external pain.

In autonomous scanning situations can be encountered where the patient cannot easily express their pain areas to a Health Care (HC) professional - either because they are unable to or that there is no HC professional available. To help address this situation, a pain sensing device is added to the apparatus. Such a pain sensing device is able to measure acute pain - of the type encountered by the physical movement of an (injured) patient. Suitable pain sensing devices are:
A device which measures a vital sign which rapidly responds to an acute pain. A suitable vital sign can be the galvanic skin conductance (GSC) of the patient, measured using 2 electrodes and a high impedance amplifier attached to a part of the patient's body (fingers, wrist or other suitable body part). The GSC has the advantage that a rapid and large increase of skin conductance is recorded around 1 second after an acute pain event, whereby corrective action can be taken before the patient suffers a prolonged pain. The electrodes can also be integrated into the textile of sheet or pillow. For example if an attachment -such as an elasticated bracelet or similar - were to be used to fix the blanket at certain points of the patient's body (to ensure correct alignment of the illuminated patches with the patient's body part), the electrodes can be integrated into this attaching device. Ideally the electrodes are attached at a point on the inside of the fastening where there is pressure applied to the patients skin - for example on the inside of an elasticated bracelet attaching the blanket at a wrist or ankle.
   - A device which measures another biometric signal indicative of pain, for example a camera device for measuring a facial expression or a cramping or spasm of the body. Such a device will however be less specific than the GSR and not so easily integrated into the textile.

If HC professionals are present (or are called), they can take corrective action with pillows/cushions to release the external pain once alerted by the pain sensor. In a more autonomous system, where staff are not easily available - or alternatively if the patient can only communicate with difficulty - the apparatus can further provide a method for localisation of the pain. Such a localisation approach can involve a sequential (small) movement of the body parts at the expected pain areas (for example with a small inflation or deflation of a support structure). An acute pain signal will again be generated when the body part producing pain is moved. At this point the system can either alert a HC professional to only adjust this part of the body or (preferably) adjust the support structure so that even a small motion of the body part does not induce acute pain.

Acute pain often results in spontaneous reactions and verbal expressions or even outcries. A voice processing unit coupled to a microphone can detect such events as they differ substantially from normal spoken language and may indicate to the staff that immediate help/support is required for the patient, e.g. by a rapidly switching of the colour of the whole bed sheet.

It is also possible for the patient to express his/her pain areas by talking to the voice processing unit naming the part of the body and the pain level, and the LEDs can light up at the appropriate areas.

All of the above help in minimizing the pain for the patient for the scan. The pain areas can be shown in different color patches with different intensity levels through LEDs embedded in the cloth of bed sheet. This avoids patient's motion during the scan as we ensure right posture for the scan by taking corrective action for the pain areas.

However, during use of MRI, any additional wiring or electronics contained in the clothes or bed sheet of the patient can lead to dangerous RF heating and patient burns. Additionally, conductive and even paramagnetic components can lead to a loss of image quality. Conversely, the main magnetic field of the MR system may impair the function of electronics in the textiles. Therefore, an embodiment of the apparatus is suitable for MR use that completely avoids any wires or electronics locally at the patient.

Because this excludes local pain and pressure sensors, the pain information input to the system in this embodiment is primarily based on existing pain area information as described above. This pain information is complemented by a camera and microphone system mounted above the patient support that monitors the facial expression and audio of the patient. Video and audio are used to evaluate the emotional state of the patient while being transferred. A coincidence of motion of a body part (as evaluated by the camera), known pain sensitivity of that body part, and painful facial expression or noises (as evaluated by camera and audio) triggers a signal to stop or slow automatic transfer. Then, a projector above the patient support is used to project color coded light spots to the sheet where those body parts that are known to be pain sensitive are located.

Thus, referring to Fig. 3, LEDs are shown in the sheet on which the patient is positioned and are lit to indicate where the patient has pain, with the area being lit slightly larger than that part of the body. Thus, in Fig. 3, some of the LEDs are actually underneath the patient and would be obscured. However, the MR compatible situation, the patient again is lying on the bed sheet and coloured lights are projected onto the sheet, on which the patient is lying. Thus, the patient's body part and the sheet around that area are illuminated.

Fig. 4 shows an example of a patient transfer training system 200, where essential features are shown in bold lines and optional features are shown in hashed lines. The system comprises a sheet 210, a processing unit 220, and a plurality of indicator devices 230. The sheet is configured to be carried by at least one person during transfer of a simulated patient from one area to another area of a medical establishment. The system is configured to generate information relating to support and position of the simulated patient during the transfer. The processing unit is configured to determine a required change in support and/or a required change in position of the simulated patient during the transfer. The determination of the required change in support and/or the required change in position of the simulated patient during the transfer comprises utilization of the information relating to support and position of the simulated patient during the transfer. The processing unit is configured to control one or more of the plurality of indicator devices to provide instructional information to one or more of the at least one person comprising utilization of the information relating to the required change in support and/or the required change in position of the simulated patient during the transfer.

It is to be noted that the instructional information can be acted on in real time in order to modify how the simulated patient is being supported and/positioned. However, the instructional information can also be saved along with how the transfer has progressed enabling for example alternative training situations to be considered by staff members. Thus, the staff members can see and learn about the consequences of how they have acted during the transfer, enabling the consequences for the patient to be considered and how this has impacted the pain they may have felt.

According to an example, the system comprises an input unit 240. The input unit is configured to receive information relating to a patient. The generation of the information relating to support and position of the simulated patient during the transfer can comprise utilization by the processing unit of the information relating to the patient.

According to an example, the information relating to the patient comprises one or more of: information relating to at least one pain area of at least one part of the body, age, weight, body mass index, physical condition, psychological condition.

According to an example, the input unit is configured to receive information relating to a transfer scenario between the two areas of the medical establishment. The determination of the required change in support and/or the required change in position of the simulated patient during the transfer can comprise utilization of the information relating to the transfer scenario.

According to an example, the processing unit is configured control one or more of the indicator devices to provide instructional information to one or more of the at least one person comprising generation of at least one image of at least a part of the simulated patient on the sheet. The generation of the at least one image of at least a part of the simulated patient on the sheet can comprise utilization of the information relating to the patient. However, a standard "one-fits all" simulated patient can be generated if required.

According to an example, the generation of the at least one image of the at least part of the simulated patient on the sheet comprises utilization of the information relating to the transfer scenario.

According to an example, the generation of the at least one image of the at least one part of the simulated patient on the sheet comprises utilization of the required change in support and/or a required change in position of the simulated patient during the transfer.

According to an example, the one or more indicator devices comprises at least one light source integrated into the sheet, a visual display unit, a virtual reality head-up display worn by one or more of the at least one person.

According to an example, the system comprises a dummy patient 250. The sheet 220 is configured to carry the dummy patient during the transfer. The information relating to support and position of the simulated patient during the transfer can comprise information derived from the dummy patient lying on the sheet during the transfer.

In an example, the determination of the required change in support and/or a required change in position of the simulated patient during the transfer comprises a determination to position one or more support devices at one or more positions of the dummy patient. The instructional information to the one or more of the at least one person can comprise an instruction to position one or more of the support devices. Thus, an indicator device can be a loudspeaker or earphone or VDU, or light source integrated into the sheet or haptic actuator integrated into the sheet that provides information to one or more persons carrying the sheet that one or more support devices should be positioned in a particular way in order to reduce pressure at one or more parts of the body of the dummy patient but still optimize position.

According to an example, the determination of the required change in support and/or the required change in position of the simulated patient during the transfer comprises utilization of the information derived from the dummy patient lying on the sheet during the transfer.

According to an example, the sheet and/or dummy patient comprises at least one pressure sensor and/or at least one force sensor 260. The at least one pressure sensor and/or at least one force sensor is configured to provide the processing unit with pressure and/or force related information resulting from the dummy patient lying on the sheet. The information derived from the dummy patient lying on the sheet during the transfer can comprise the pressure and/or force related information.

According to an example, the dummy patient has at least one movable joint linking two parts of the dummy patient comprising one or more of: a movable and controllable left leg knee joint, a movable and controllable right leg knee joint, a movable and controllable left leg hip joint, a movable and controllable right leg hip joint, a movable and controllable left leg ankle joint, a movable and controllable right leg ankle joint, a movable and controllable left arm elbow joint, a movable and controllable right arm elbow joint, a movable and controllable left arm wrist joint, a movable and controllable right arm wrist joint, a movable and controllable left arm shoulder joint, a movable and controllable right arm shoulder joint, a movable and controllable neck joint linked to a head. The processing unit is configured to control movement of the at least one movable joint such that the two parts linked by the joint move relative to each other. It is to be noted that reference to movable joint can mean the two parts of the dummy patient linked by the joint are movable, and reference to the control of movement of a movable joint can mean control of movement of one or more of the parts of the dummy patient linked by that joint rather than control of the joint itself. What however is meant is that one or more of the joint and two parts linked at the joint can be controlled such that one part of the dummy patient moves relative to the other part of the dummy patient where those two parts are linked by the joint.

According to an example, the control of the movement of the at least one joint comprises utilization of the information relating to the patient.

According to an example, the control of the movement of the at least one joint comprises utilization of the information relating to the transfer scenario.

According to an example, the plurality of indicator devices comprises a plurality of haptic actuators 270 integrated into at least one edge and/or central region of the sheet. The control of the one or more of the plurality of indicator devices to provide information relating to the required change in support and/or the required change in position of the simulated patient during the transfer comprises control of one or more of the haptic actuators.

According to an example, the determination of the required change in support and/or the required change in position of the simulated patient during the transfer comprises a comparison between a current support and/or position of the simulated patient with an ideal support and/or position of the simulated patient.

In an example, the ideal support and/or position of the simulated patient during the transfer can be derived from input from medical professionals who have been involved in the transport of multiple different patients with multiple different conditions and pain scenarios, during the transfer of patients in many different transfer scenarios. Thus, during the training as the sheet is carried, with a simulated patient, during a particular transfer scenario the patient could at different stages be carried in a non-optimum way. However, the system provides feedback to enable the people carrying the simulated person to reposition that simulated person correctly taking into account the transfer scenario and whoever the patient is in terms of age, size, disability or impairment, and the medical condition or pain issues they have.

In this manner, the people being trained are in effect being trained to reproduce how expert medical professionals would have transferred a specific patient in a specific transfer scenario. To put this another way, sensor data can enable better positioning and support of a patient being transferred and as more data is acquired this can effect a better transfer as additional trade off data becomes available.

Thus, the automated transfer of patients is enabled considering the current position and future position with minimal 'pain to the patient. This can be considered in more detail, by considering two positions (such as in chess playing algorithms), where the automated device will transfer patients considering the pain input from the smart sheet as the input. The optimization function is then the reduction of pain. The series of steps to be performed can then be described as an instruction from one position to another and can also be coded, in the way chess moves are described.

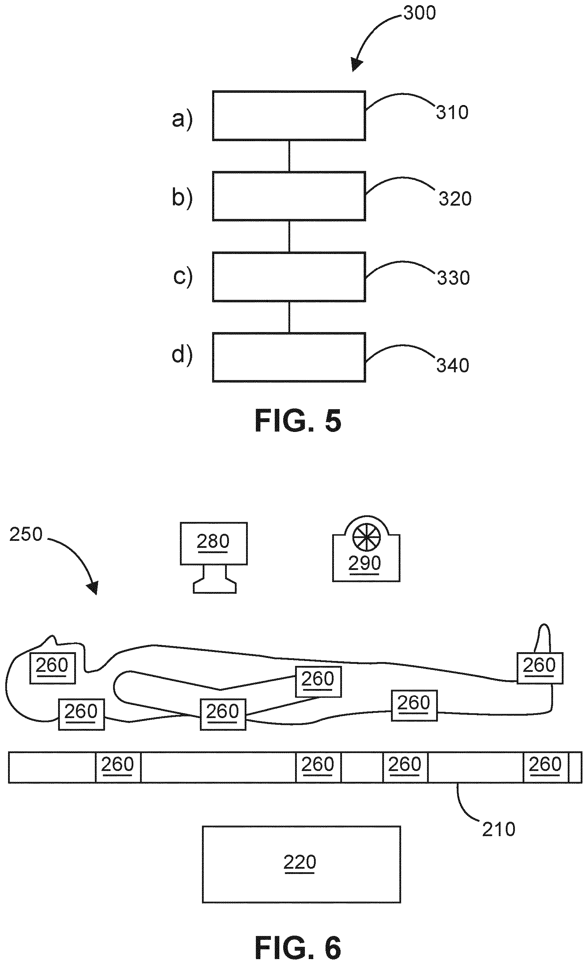

Fig. 5 shows a patient transfer training method 300 in its basic steps. The method comprises:
- in a carrying step 310, also referred to as step a), carrying a sheet by at least one person during transfer of a simulated patient from one area to another area of a medical establishment;
- in a generating step 320, also referred to as step b), generating information relating to support and position of the simulated patient during the transfer;
- in a determining step 330, also referred to as step c), determining by a processing unit a required change in support and/or a required change in position of the simulated patient during the transfer, wherein the determining comprises utilizing the information relating to support and position of the simulated patient during the transfer; and
- in a controlling step 340, also referred to as step d), controlling one or more of a plurality of indicator devices to provide instructional information to one or more of the at least one person comprising utilizing the information relating to the required change in support and/or the required change in position of the simulated patient during the transfer.

In an example, the method comprises receiving information relating to a patient, and wherein step b) comprises utilizing the information relating to the patient.

In an example, the information relating to the patient comprises one or more of: information relating to at least one pain area of at least one part of the body, age, weight, body mass index, physical condition, psychological condition.

In an example, the method comprises receiving information relating to a transfer scenario between the two areas of the medical establishment, and wherein step c) comprises utilizing the information relating to the transfer scenario.

In an example, step d) comprises generating at least one image of the simulated patient on the sheet, wherein the generating comprises utilizing the information relating to the patient.

In an example, the generating of the at least one image of the simulated patient on the sheet comprises utilizing the information relating to the transfer scenario.

In an example, the generating of the at least one image of the simulated patient on the sheet comprises utilizing the required change in support and/or a required change in position of the simulated patient during the transfer.

In an example, the one or more indicator devices comprises at least one light source integrated into the sheet, a visual display unit, a virtual reality head-up display worn by one or more of the at least one person.

In an example, step a) comprises carrying a dummy patient on the sheet during the transfer; and in step b) the information relating to support and position of the simulated patient during the transfer comprises information derived from the dummy patient lying on the sheet during the transfer.

In an example, step c) comprises utilizing the information derived from the dummy patient lying on the sheet during the transfer.

In an example, the sheet and/or dummy patient comprises at least one pressure sensor and/or at least one force sensor, wherein the at least one pressure sensor and/or at least one force sensor is configured to provide pressure and/or force related information resulting from the dummy patient lying on the sheet, and wherein in step b) the information derived from the dummy patient lying on the sheet during the transfer comprises the pressure and/or force related information.

In an example, the dummy patient has at least one movable joint linking two parts of the dummy patient comprising one or more of: a movable and controllable left leg knee joint, a movable and controllable right leg knee joint, a movable and controllable left leg hip joint, a movable and controllable right leg hip joint, a movable and controllable left leg ankle joint, a movable and controllable right leg ankle joint, a movable and controllable left arm elbow joint, a movable and controllable right arm elbow joint, a movable and controllable left arm wrist joint, a movable and controllable right arm wrist joint, a movable and controllable left arm shoulder joint, a movable and controllable right arm shoulder joint, a movable and controllable neck joint; and wherein the method comprises controlling movement of the at least one movable joint such that the two parts linked by the joint move relative to each other.

In an example, controlling of the movement of the at least one joint comprises utilizing the information relating to the patient.

In an example, controlling of the movement of the at least one joint comprises utilizing the information relating to the transfer scenario.

In an example, the plurality of indicator devices comprises a plurality of haptic actuators integrated into at least one edge and/or central region of the sheet, and wherein step d) comprises control of one or more of the haptic actuators.

In an example, step c) comprises comparing a current support and/or position of the simulated patient with an ideal support and/or position of the simulated patient.

Rather than use the sheet without a dummy patient or with a dummy patient in order in the transfer of a simulated patient, a trainee or trainer could take the part of the simulated patient and act in a manner consistent with information relating to a patient for a training exercise, such as a patient having a particular pain condition such as a burnt leg, or a broken leg, or multiple burnt or broken parts of the body - for example.

The patient transfer training system and the patient transfer training method are now described in further specific detail where reference is made to Figs. 6-8.

As discussed above, the transfer of the patient from the patient bed to the patient table of an imaging system is a critical procedure, especially when the patient has sensitive body areas that can lead to high pain levels when touched or pressure is applied. However, this is addressed via a system, method and workflow procedure for the training and guidance of how to use a smart bed sheet. The person or persons using the smart bed sheet is provided with feedback information to learn how to operate and use the information for transfer and placement of the patient with the lowest pain level under consideration of all possible scenarios. Technical means help in combination with additional patient and scan planning information to propose best trade off decisions and the related guideline for the patient handling. The system and method, which in essence form a simulator, also has means of carry forward (on field show me data) from simulation data/situations to actual situations that can be adapted for specific patient profile, role, scan type. The carry forward situation (on field show me data) can be executed into a portable device which can deliver the simulated situations in a context aware manner. This data can be a self-executable or via a special program (e.g. mobile app) or it can be downloaded into the smart sheet itself. As described below, the simulator also provides a workflow for smart bedsheet cleaning, sanitization and its readiness for use.

Fig. 6 Shows a detailed example of a patient transfer training system, where a bed sheet or sheet 210 has a number of sensors 260 in the form of pressure and/or force sensors. During training, one or more staff members carry the sheet upon which a dummy 250 is positioned. The dummy also has a number of sensors 260 in the form of pressure and/or force sensors. The dummy can also give audio feedback such as sounds relating to pain, speech etc, therefore, referring to Fig. 6 audio sounds can be for example emitted from the mouth or other parts of the dummy's body, and can therefore a loudspeaker can be positioned at the mouth of the dummy or elsewhere about the dummy's body. The system also has a processing unit 220, and in this specific embodiment has a camera 280 and alarm 290 that can be acoustic and/or optical.

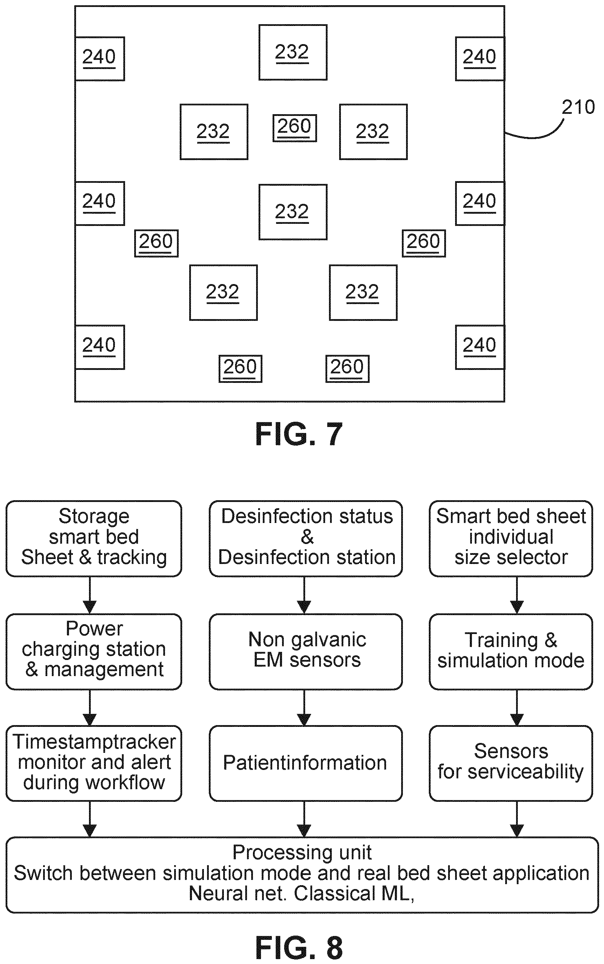

Fig. 7 shows an example of the sheet 210, which can be the sheet 20 as described with respect to Figs. 1-3, but here in this specific embodiment is a modified version of that sheet. The sheet 210 shown in Fig. 7 has a number of haptic interface areas 240 shown around the periphery of the sheet but one or more haptic interface areas can also be in the centre region of the sheet because users can support the patient in the middle of the sheet under the patient's body, and a number of light indicating areas or light sources 232 integrated into the sheet. The sheet also has a number of sensors 260 in the form of pressure and/or force sensors. As staff carry the sheet during a training session, a dummy patient can be positioned on the sheet, but this is not essential because training can be conducted without the dummy patient. This information is provided regarding the simulated patient to be carried from one place to another on the sheet, and information regarding the transfer scenario such as from an ambulance to a bed is also provided. The sheet can indicate the location of the simulated patient on the sheet via the light areas or sources, and as the staff members carry the sheet the light areas or sources can be used also to indicate the correct positioning and/or support required for a simulated patient. The light sources can be coloured, and can be the same or similar to the light sources described with respect to Figs. 1-3, and indeed in a specific embodiment the sheet described with respect to Figs. 4-8 is the same sheet as described with respect to Figs. 1-3, but operated in a training mode. Alternatively or additionally to the use of light sources, the haptic areas can provide the necessary information to the people carrying the sheet to adjust how they are carrying the sheet in order to change the support and/or position of the simulated patient. Thus, the training can take into account the specific details of the patient, and can take into account the transfer scenario such as how to cope with a set of stairs along with the route whilst transferring a patient who will experience intense pain if not transferred correctly. The sensors in the sheet enable a dummy patient to be transported and data gathered relating to their position and how they are being carried. Rather than have sensors in the sheet, the sensors can be located in the dummy itself or indeed the sensors can be located both in the sheet and in the dummy. Again, the required information regarding a change in the support or position can be relayed via the haptic actuators or areas or via the light sources in the sheet. It is to be noted that the camera can be used to confirm the position of the dummy patient on the sheet, and if necessary if during the transfer of the simulated patient a determination is made that the patient is experiencing or will experience pain then the alarm can sound and/or emit light to warn the staff members carrying sheet.

During the training session, when there is no dummy, the processing unit can start by providing illumination identifying the position of a simulated patient on the sheet, and move the simulated patient to simulate a person who may be moving due to pain or for another reason. The processing unit can then determine the corrective action required by the staff members carrying the sheet by generating light to indicate where the patient should be positioned and supported, enabling the staff members to adjust how they are carrying the sheet accordingly. When there is a dummy, the dummy itself can have robotic function and the processing unit can move the dummy during the training session to simulate movement of the patient. Furthermore the dummy may comprise a loudspeaker where it can provide vocal responses during the training. Again, depending upon the position of the patient, and the transfer scenario and information relating to the patient, information can then be provided to the staff members carrying the sheet in the form of a haptic response and/or light generated within the sheet as to the position and/or support of the patient required, enabling those staff members to alter the way they are carrying the patient accordingly.

### EXEMPLAR FEATURES OF A DETAILED PATIENT TRANSFER TRAINING SYSTEM

The transfer of acute care patients or patients with high pain levels is a difficult scenario. Therefore, the patient transfer training system comprising a smart bed sheet, in effect a simulator tool, has been developed to train staff in patient handling in many different situations. The bed sheet simulator tool can be also the real smart bed sheet, described with respect to Figs. 1-3, operated in the simulation mode for training. However, the bed sheet simulator tool can comprises increased functionality compared to the actual bed sheet. The bed sheet simulator tool can be therefore MRI/CT/PET compatible along with the whole patient transfer training system, however because the training can be conducted away from such scanners the additional functionality can be designed to provide maximum functional performance without requiring to be MRI/CT/PET compatible. The additional functionality can comprise:
A passive or an active patient dummy with actuators, loudspeaker or human like movement interactions
Haptic actuators to assist the staff to handle the sheet during the training process
Additional sensors to inform the training system where and with how much contact pressure or lateral force the staff is handling the blanket
Additional sensors to inform the training system where and with how much contact pressure or lateral force the blanket is creating on the patient dummy
A camera system to further assist the staff or patient during the training, for example by registering (relative) positioning of staff/patient dummy/blanket/patient table or by registering illuminations of the pain sensors. The latter functionality can be of great importance if there are several pain areas active at the same time to train the staff how to e.g. focus their attention to the most important pain area first.
Alarm system.

The smart bed sheet simulator can be programmed to simulate different patient situations with different pain levels at different body regions. For more realistic training a patient dummy can be used. Also here different options are possible - either the usage of a passive patient dummy that just represents the patient body but has no feedback function. The other option is an active patient dummy that is connected to the smart bed sheet simulator to measure pressure and other impacting events at the locations where the smart bed sheet simulator highlights the different pain regions. During active movement of the patient dummy the sensors measure, record and display the forces and indicate the potential pain level of the patient.

The bed sheet simulator also has ability to export specific patient situations for real life guidelines. These can be executed in context specific manner for e.g. while patient transportation, patient position etc. the context can provide on how to put the sheet, how to lift specific patients (degree of burn), specific pain area, etc.

The training workflow will check for several situations including worst case situation when wrong handling leads to extreme pain situations which require urgent medical support. The training workflow includes the understanding of the "pain-patient-user-interface" - this means that the staff have to do the correct interpretation of the pain indicating colour-code information. In critical situations an acoustic or optic alarm can be switched on.

The workflow for training includes a virtual (VR/AR) introduction and hands-on training with the device in the simulation mode including guidance to staff via VR/AR display. This includes the correct placement and handling of the smart bed sheet, and where for example when a dummy or trainee simulating a patient lies on the bed, AR can be utilized to to augment the patient or sheet as and when it is to be seen completely.

The handling for patients that cannot express themselves, that are sedated, that are disabled or require special attention (also children) require additional prediction and guidance from the training/simulation tool but also guidance for the staff that could be indicated via the smart bed sheet (LED guidance), display, audio, thereby enabling patient specific guidance to be provided.

The guidance includes corrective action for the patient.

Special attention can be given to the body areas where additional sensors are provided and to account for MRI where the body or head-coil would be placed. A special mode will indicate these additional areas ("in scanner prediction") and in the workflow guidance tool (display, audio etc.) the special action for careful positioning and/or alternative positions will be displayed based on the scanning plan of the patient.

The simulation of a malfunction and/or emergency stop including required new patient transfer is part of the risk management and simulation/training for this.

The processing unit selects the best trade off in positioning with minimum pain but best prepared for the scanning region. The prior knowledge of the scan regions allows for an optimized guidance and sequence of positioning and then the scanning.

Coaching and staff training for usage of smart bed sheet devices (and other pain detectors) considering online support and context based interaction

The smart sheet can be used for CT, DXR, PET etc.

Certified guideline can be used to help to address regulatory issues for more autonomous operation (e.g. automatic patient-transfer using the sensor feedback signals from a smart bed sheet), and where logging the quality of handling ensures training quality.

Fig. 8 shows a complete and detailed workflow representation of the patient transfer training system and method. As discussed above, in determining how the patient should be transferred on the sheet, feedback information is provided relating to the desired support and/or position of the simulated patient on the sheet. It is to be noted that when a real patient or trainee simulating a patient is put on the sheet, the sheet can have one or more holders for the patient and the operator, and as such the patient can be hold on to the sheet using these fixation devices. These fixation devices are equipped with sensors and displaying devices, so that only these holders are used, which are not located at a pain location.

Data used in this determination can be derived from real patients being transferred on the sheet described with respect to Figs. 1-3 as part of an apparatus for displaying patient pain information. However, further data can be acquired from sensors used to assess pain, such as electromagnetic sensors that can be RADAR or Impedance based sensors or other sensors as would be appreciated by the skilled person, camera-based sensors, heart rate sensors, breathing rate sensors, 3D camera-based face recognition and emotional state determination using AI technology, microphone and speech and voice emotion recognition and analysis using AI technology. This enables, pain and stress levels of real patients to be determined during transfer on a sheet, and this information can be utilised during training to determine how the support and/or position of specific patients should be altered during the transfer taking into account the transfer scenario if required. Taking stress level as an example, the prediction of the stress level can be realized by an artificial intelligence (AI) algorithm, using the features as input and the stress level as output. The algorithm may be a combination of a machine learning approach for the derivation of the current stress level (such as support vector machine or neural network), and a machine learning approach for predicting the development of the stress level during the next few minutes (such as RNN or LSTM). Supervised training of the AI algorithm is realized using feedback from the patient (e.g., emergency button status or self-estimation of stress level) as labels.

Continuing with Fig. 8 this shows workflow aspects, which can be included in a training and simulation environment. The smart bed sheet (SBS) needs to be stored, and the storage and tracking of the SBS can be performed in a defined way. The disinfect status can be digitally monitored on the SBS by a sensor. Disinfection can be performed locally by operator/patient or by a dedicated disinfect station. The individual SBS can be selected by the operator based on patient database or by automatic selection (camera). A chosen SBS can depend on the size or clinical application (comfort, time of stay, sensors). The SBS electronics can be charged and managed by a power management charging station. The SBS can be switched between a training & simulation mode and real application mode. A timestamp tracker monitors the workflow and includes different timestamps (used as label in SW decision process) such as duration on the SBS, patient history etc. Patient information from the hospital database is used as decision input to select a training & simulation mode. Different sensors are integrated in the SBS, which are relevant for serviceability. Including data from power & charging station and processing unit a decision is taken if the SBS needs prospective service or needs to be replaced. A non galvanic EM sensor can be located in the SBS and sensor information is processed by ML learning approach for predicting pain level, thereby enabling the smart sheet to be used to gather data to be used during training.

The requirement to sterilise the bed sheet, is because the smart bedsheet will be used frequently. To have effective use, it therefore needs to be continuously clean, sterilized and used in many situations. The sheet can memorize the level of touch of patient, staff and with other equipment's and surfaces. This information can be fed back during simulations to teach automatically how it can/should be sterilized. Based on the memorized locations, it can further be used to auto sterilized based on UV light irradiance by communicating with the irradiating machine. Based on the level of unhygienic conditions, it can alert staff, when to clean. Regarding readiness for use, the battery level of the sheet can be monitored in order that the sheet can be charged appropriately to ensure that it is always ready for use. Either a plug in connection can be used to assess the battery level, or a wireless connection can be used to transmit a battery charge level to a monitor station for example.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A patient transfer training system (200), comprising:
- a sheet (210);
- a processing unit (220); and
- a plurality of indicator devices (230);
wherein, the sheet is configured to be carried by at least one person during transfer of a simulated patient from one area to another area of a medical establishment;
wherein, the system is configured to generate information relating to support and position of the simulated patient during the transfer;
wherein, the processing unit is configured to determine a required change in support and/or a required change in position of the simulated patient during the transfer, wherein the determination comprises utilization of the information relating to support and position of the simulated patient during the transfer; and
wherein, the processing unit is configured to control one or more of the plurality of indicator devices to provide instructional information to one or more of the at least one person comprising utilization of the information relating to the required change in support and/or the required change in position of the simulated patient during the transfer.

2. System according to claim 1, wherein the system comprises an input unit (240), wherein the input unit is configured to receive information relating to a patient, and wherein the generation of the information relating to support and position of the simulated patient during the transfer comprises utilization by the processing unit of the information relating to the patient.

3. System according to claim 2, wherein the information relating to the patient comprises one or more of: information relating to at least one pain area of at least one part of the body, age, weight, body mass index, physical condition, psychological condition.

4. System according to any of claims 2-3, wherein the input unit is configured to receive information relating to a transfer scenario between the two areas of the medical establishment, and wherein determination of the required change in support and/or the required change in position of the simulated patient during the transfer comprises utilization of the information relating to the transfer scenario.

5. System according to any of claims 2-4, wherein the processing unit is configured to control one or more of the indicator devices to provide instructional information to one or more of the at least one person comprising generation of at least one image of at least a part of the simulated patient on the sheet, wherein the generation comprises utilization of the information relating to the patient.

6. System according to claim 5 when dependent upon claim 4, wherein the generation of the at least one image of the at least part of the simulated patient on the sheet comprises utilization of the information relating to the transfer scenario.

7. System according to any of claims 5-6, wherein the generation of the at least one image of the at least one part of the simulated patient on the sheet comprises utilization of the required change in support and/or a required change in position of the simulated patient during the transfer.

8. System according to any of claims 5-7, wherein the one or more indicator devices comprises at least one light source integrated into the sheet, a visual display unit, a virtual reality head-up display worn by one or more of the at least one person.

9. System according to any of claims 1-4, wherein the system comprises a dummy patient (250); wherein the sheet is configured to carry the dummy patient during the transfer; and wherein the information relating to support and position of the simulated patient during the transfer comprises information derived from the dummy patient lying on the sheet during the transfer.

10. System according to claim 9, wherein determination of the required change in support and/or the required change in position of the simulated patient during the transfer comprises utilization of the information derived from the dummy patient lying on the sheet during the transfer.

11. System according to any of claims 9-10, wherein the sheet and/or dummy patient comprises at least one pressure sensor and/or at least one force sensor (260), wherein the at least one pressure sensor and/or at least one force sensor is configured to provide the processing unit with pressure and/or force related information resulting from the dummy patient lying on the sheet, and wherein the information derived from the dummy patient lying on the sheet during the transfer comprises the pressure and/or force related information.

12. System according to any of claims 9-11, wherein the dummy patient has at least one movable joint linking two parts of the dummy patient comprising one or more of: a movable and controllable left leg knee joint, a movable and controllable right leg knee joint, a movable and controllable left leg hip joint, a movable and controllable right leg hip joint, a movable and controllable left leg ankle joint, a movable and controllable right leg ankle joint, a movable and controllable left arm elbow joint, a movable and controllable right arm elbow joint, a movable and controllable left arm wrist joint, a movable and controllable right arm wrist joint, a movable and controllable left arm shoulder joint, a movable and controllable right arm shoulder joint, a movable and controllable neck joint linked to a head; and wherein the processing unit is configured to control movement of the at least one movable joint such that the two parts linked by the joint move relative to each other.

13. System according to claim 12 when dependent upon claim 2, wherein control of the movement of the at least one joint comprises utilization of the information relating to the patient.

14. System according to any of claims 12-13 when dependent upon claim 4, wherein control of the movement of the at least one joint comprises utilization of the information relating to the transfer scenario.

15. System according to any of clams 1-14, wherein the plurality of indicator devices comprises a plurality of haptic actuators (270) integrated into at least one edge and/or central region of the sheet, and wherein the control of the one or more of the plurality of indicator devices to provide information relating to the required change in support and/or the required change in position of the simulated patient during the transfer comprises control of one or more of the haptic actuators.

16. ystem according to any of claims 1-15, wherein determination of the required change in support and/or the required change in position of the simulated patient during the transfer comprises a comparison between a current support and/or position of the simulated patient with an ideal support and/or position of the simulated patient.

17. A patient transfer training method (300), comprising:
a) carrying (310) a sheet by at least one person during transfer of a simulated patient from one area to another area of a medical establishment;
b) generating (320) information relating to support and position of the simulated patient during the transfer;
c) determining (330) by a processing unit a required change in support and/or a required change in position of the simulated patient during the transfer, wherein the determining comprises utilizing the information relating to support and position of the simulated patient during the transfer; and
d) controlling (340) one or more of a plurality of indicator devices to provide instructional information to one or more of the at least one person comprising utilizing the information relating to the required change in support and/or the required change in position of the simulated patient during the transfer.
